# EUROPEAN PATENT SPECIFICATION

(11) **EP 3 051 888 B1**
(45) Date of publication and mention of the grant of the patent: **21.02.2018**
(21) Application number: 15199242.7
(22) Date of filing: 10.12.2015
(51) Int. Cl.: H04W 76/04, H04W 72/04, H04W 56/00, H04W 52/02

(54) **TRANSMISSION APPARATUS, RECEPTION APPARATUS, AND COMMUNICATION SYSTEM**
ÜBERTRAGUNGSVORRICHTUNG, EMPFANGSVORRICHTUNG UND KOMMUNIKATIONSSYSTEM
APPAREIL DE TRANSMISSION, APPAREIL DE RÉCEPTION ET SYSTÈME DE COMMUNICATION

(30) Priority: 28.01.2015 JP 2015014715
(43) Date of publication of application: 03.08.2016
(73) Proprietor: FUJITSU LIMITED, Kawasaki-shi, Kanagawa 211-8588 (JP)
(72) Inventor: MIBU, Ryo, Kanagawa, 222-0033 (JP); SAKURAI, Katsumi, Kanagawa, 211-8588 (JP); TAKAHASHI, Yuji, Kanagawa, 211-8588 (JP); IWAO, Tadashige, 100025 Beijing (CN)
(74) Representative: Hoffmann Eitle

(56) References cited:
- MESSAOUD DOUDOU ET AL: "Survey on Latency Issues of Asynchronous MAC Protocols in Delay-Sensitive Wireless Sensor Networks", IEEE COMMUNICATIONS SURVEYS AND TUTORIALS, INSTITUTE OF ELECTRICAL AND ELECTRONICS ENGINEERS, US, vol. 15, no. 2, 1 April 2013 (2013-04-01), pages 528-550, XP011508061, ISSN: 1553-877X, DOI: 10.1109/SURV.2012.040412.00075
- David Moss ET AL: "BoX-MACs: Exploiting Physical and Link Layer Boundaries in Low-Power Networking. Technical Report SING-08-00.", , 1 January 2008 (2008-01-01), XP055273896, Retrieved from the Internet: URL:https://sing.stanford.edu/pubs/sing-08 -00.pdf [retrieved on 2016-05-20]
- MERLIN C J ET AL: "Schedule Adaptation of Low-Power-Listening Protocols for Wireless Sensor Networks", IEEE TRANSACTIONS ON MOBILE COMPUTING, IEEE SERVICE CENTER, LOS ALAMITOS, CA, US, vol. 9, no. 5, 1 May 2010 (2010-05-01), pages 672-685, XP011335466, ISSN: 1536-1233, DOI: 10.1109/TMC.2009.153
- KAI-JUAN WONG ET AL: "SpeckMAC Low-power Decentralised MAC Protocols forLow Data Rate Transmissions in Specknets", PROCEEDING REALMAN, 1 January 2006 (2006-01-01), page 71, XP055274142, DOI: 10.1145/1132983.1132996 ISBN: 978-1-59593-360-7

## Description

### FIELD

The present disclosure relates to a transmission apparatus, a reception apparatus, and a communication system.

### BACKGROUND

Intermittent reception is one of methods of reducing power consumption of a node on a reception side of nodes that perform wireless communication with each other. In the intermittent reception, the node on the reception side performs the following operation. That is, the node on the reception side carries out carrier sense at certain intervals (also referred to as monitoring intervals) . When a carrier (a wireless frame transmitted from a node on a transmission side) is detected in the carrier sense, the node on the reception side receives data contained in the wireless frame. The node on the reception side is in a power-off state (referred to as power saving mode) during not carrying out the carrier sense, except for a predetermined function. As described above, the intermittent reception can be considered as a method of releaseling the power saving mode at predetermined intervals to try sensing a frame from a transmission apparatus and receiving data contained in a wireless frame when the wireless frame can be detected.

In the intermittent reception, when a transmission time period of a wireless frame is shorter than the time length of the monitoring interval, the node on the reception side in some cases fails to detect a transmitted wireless frame during the monitoring interval. For that reason, the transmission time period of a wireless frame is set to be longer than the monitoring interval. For example, when the monitoring interval is two seconds, a sequence of a wireless frame in which a preamble having a length of, for example, about 2.2 seconds is followed by a synchronization word (Sync Word), a payload, and a CRC part, is transmitted. The reception of the data is made by the reception of data contained in the payload.

For further information, see Japanese Laid-Open Patent Publication No. 2000-209299, and Japanese Laid-Open Patent Publication No. 2013-5419.

Document MESSAOUD DOUDOU ET AL, "Survey on Latency Issues of Asynchronous MAC Protocols in Delay-Sensitive Wireless Sensor Networks", IEEE COMMUNICATIONS SURVEYS AND TUTORIALS, INSTITUTE OF ELECTRICAL AND ELECTRONICS ENGINEERS, US, (20130401), vol. 15, no. 2, doi:10.1109/SURV.2012.040412.00075, ISSN 1553-877X, pages 528 - 550, XP011508061 describes a survey on latency issues of asynchronous Mac protocols in delay-sensitive a wireless sensor networks.

Document David Moss ET AL, "BoX-MACs: Exploiting Physical and Link Layer Boundaries in Low-Power Networking. Technical Report SING-08-00.", (20080101), URL: https://sing.stanford.edu/pubs/sing-08-00.pdf, (20160520), XP055273896 describes exploiting physical and link layer boundaries in low-power networking.

Document MERLIN C J ET AL, "Schedule Adaptation of Low-Power-Listening Protocols for Wireless Sensor Networks", IEEE TRANSACTIONS ON MOBILE COMPUTING, IEEE SERVICE CENTER, LOS ALAMITOS, CA, US, (20100501), vol. 9, no. 5, doi:10.1109/TMC.2009.153, ISSN 1536-1233, pages 672 - 685, XP011335466 describes schedule adaptation of low-power listening protocols for wireless sensor networks.

The node on the reception side receives a payload when a synchronization word matches a synchronization word saved (stored) in the node on the reception side. For that reason, when a carrier (a preamble) is detected, the node on the reception side stands by for the reception of a synchronization word. Until the synchronization word is detected, a state continues where the power saving mode is released.

As mentioned above, when the time length of the preamble is about 2.2 seconds, a time period of two seconds or more may be taken from the sensing of the preamble up to the reception of a synchronization word. It is not preferable that the power saving mode is released over such a time period, from a viewpoint of power consumption reduction.

The present invention has an object to provide a technique that is capable of shortening a time period during which power saving mode is released in a reception apparatus.

### SUMMARY

The above object is solved by the subject matter of the independent claims were the dependent claims describe advantageous embodiments. According to one aspect, a transmission apparatus includes a transmission unit configured to transmit, to a reception apparatus performing intermittent reception, a frame in which a subframe is repeated at intervals each being shorter than an interval for the intermittent reception, the subframe containing at least a preamble, a synchronization word, and data for the reception apparatus.

As one aspect, it is possible to achieve shortening a time period during which power saving mode is released in a reception apparatus.

### BRIEF DESCRIPTION OF THE DRAWINGS

Fig. 1 is a diagram illustrating a format of a wireless signal according to a related art;
Fig. 2 is an illustrative diagram of how power is consumed in a wireless communication apparatus (a transmission apparatus or a reception apparatus), in the related art;
Fig. 3 illustrates an example of a communication system according to an embodiment;
Fig. 4 illustrates an example of a format of a wireless signal (a wireless frame) that is transmitted from the transmission apparatus to the reception apparatus in the communication system according to the embodiment;
Fig. 5 is a diagram illustrating a configuration example of the wireless communication apparatus;
Fig. 6 is a flow chart illustrating an example of processing performed by an MCU;
Fig. 7 is a flow chart illustrating an example of processing performed by an RF LSI;
Fig. 8 is a flow chart illustrating the example of processing performed by the RF LSI;
Fig. 9 is an illustrative diagram of an operational advantage of the embodiment;
Fig. 10 an illustrative diagram of an operational advantage of the embodiment;
Fig. 11 is a diagram illustrating an example of duplicate reception of data; and
Fig. 12 is an illustrative diagram of a method of avoiding the duplicate reception of data (a waiting process for remaining time).

### DESCRIPTION OF EMBODIMENTS

Hereinafter, an embodiment will be described with reference to the accompanying drawings. The configurations of the embodiment are merely an example, and the present invention is not limited to the configurations of the embodiment.

### [Related Art]

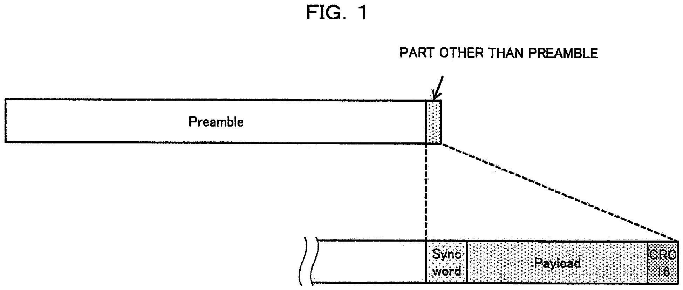

First, a related art will be described. Fig. 1 is a diagram illustrating a format of a wireless frame (a wireless signal) according to the related art. Hereafter, the wireless frame will be simply expressed as a frame. As illustrated in Fig. 1, the frame is composed of a preamble and a part other than the preamble. The part other than the preamble includes, for example, a synchronization word (Sync Word) that follows the preamble, a payload (data), and a Cyclic Redundancy Check (CRC) .

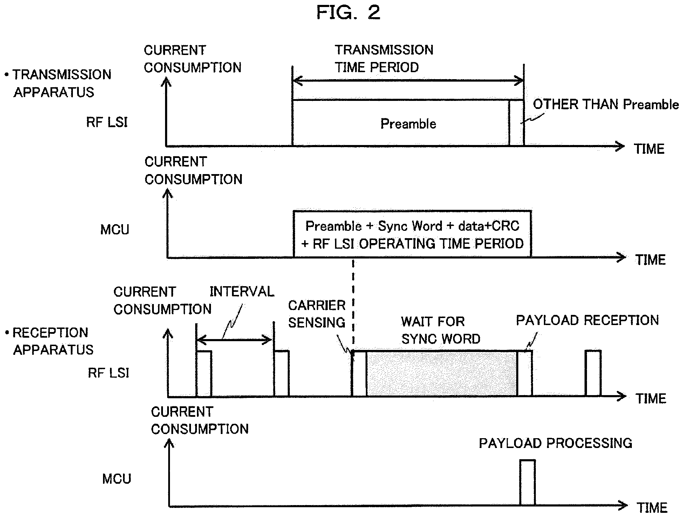

Fig. 2 is an illustrative diagram of how power is consumed in a wireless communication apparatus (a transmission apparatus, a reception apparatus), in the related art. Each of the transmission apparatus and the reception apparatus includes an RF (Radio Frequency) LSI (Large Scale Integrated circuit) that performs wireless processing, and a microcontroller (Micro Control Unit: MCU) that controls the RF LSI.

In Fig. 2, the uppermost chart depicts the relationship between current consumption and time (power consumption), in the RF LSI of the transmission apparatus . The second uppermost chart depicts the relationship between current consumption and time (power consumption), in the MCU of the transmission apparatus. The third uppermost chart depicts the relationship between current consumption and time (power consumption), in the RF LSI of the reception apparatus. The lowermost chart depicts the relationship between current consumption and time (power consumption), in the MCU of the reception apparatus.

The RF LSI of the transmission apparatus illustrated in Fig. 1 consumes current during the transmission time period of the wireless signal (the preamble, synchronization word, payload, and CRC) . Except during the time period, the RF LSI transits to the power saving mode. Meanwhile, the MCU of the transmission apparatus consumes current during a time period to generate the preamble, synchronization word, data (payload), and CRC, as well as a time period to operate the RF LSI. Except during the time period, the MCU transits to the power saving mode.

Meanwhile, the RF LSI of the reception apparatus releases the power saving mode at predetermined monitoring intervals (hereafter, simply referred to as intervals or CS intervals) and carries out carrier sense (CS) on a wireless signal from the transmission apparatus. During a time period for the carrier sense, power is consumed. When a carrier is detected in the carrier sense, the RF LSI stands by for a synchronization word (waits for a Sync Word). After the confirmation of the synchronization words matching, the reception (taking in) of a payload (data) is performed.

During the carrier sensing, the synchronization word standby, and the payload reception, the RF LSI is in an active state (active mode) . For that reason, consumed power is more than the power consumption in the power saving mode. Not during the time period for the carrier sensing, the synchronization word standby, and the payload reception, the RF LSI transits to a non-active state without a predetermined function, namely, the power saving mode.

When the RF LSI receives the payload (data), the MCU of the reception apparatus releases the power saving mode to transit to the active state (active mode) . The MCU performs a process on the received data and transits to the power saving mode again when the process is finished. Therefore, during the data processing by the MCU, consumed power is more than the power in the power saving mode.

When an interval of monitoring the carrier, illustrated in Fig. 2, in the reception apparatus is two seconds, for example, the time length of the preamble illustrated in Fig. 1 and Fig. 2 is set at, for example, 2.2 seconds. In this case, the RF LSI of the reception apparatus performs, after sensing a preamble, synchronization word waiting for a maximum of 2.2 seconds to detect a synchronization word. Since the RF LSI is in the active mode during the synchronization word waiting, more power is consumed than in the power saving mode.

In an embodiment to be described below, there will be described a method of transmitting frames, a wireless communication apparatus, and the like, the method being capable of reducing power consumption by shortening the above-described time period of synchronization word waiting (a time period during which the power saving mode is released).

### [Embodiment]

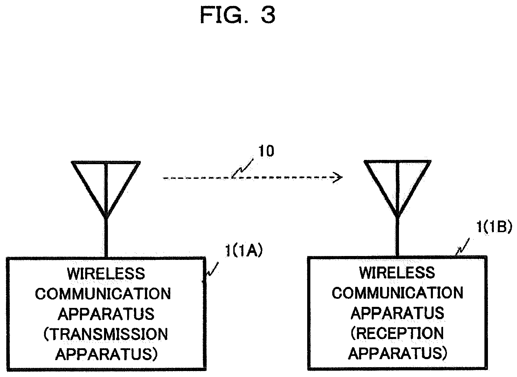

Fig. 3 illustrates an example of a communication system according to an embodiment. The communication system includes two wireless communication apparatuses 1 that transmit and receives data with each other through wireless communication. One of the wireless communication apparatuses 1 operates as a transmission apparatus that transmits a wireless signal (a frame) containing data, and the other wireless communication apparatus 1 operates as a reception apparatus that receives the transmitted wireless signal (frame). Hereafter, a wireless communication apparatus 1 on a transmission side will be expressed as a transmission apparatus 1A, and a wireless communication apparatus 1 on a reception side will be expressed as a reception apparatus 1B.

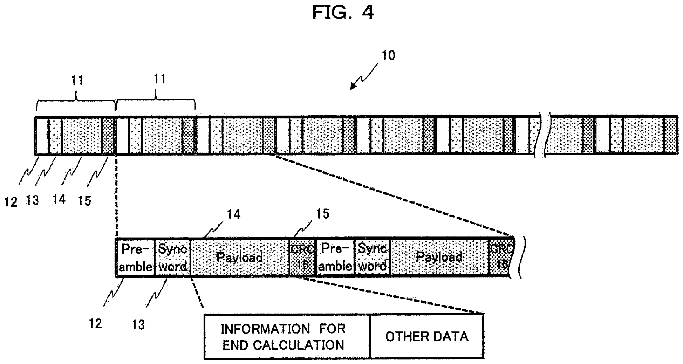

Fig. 4 is a diagram illustrating a format example of a wireless signal (a frame) that is transmitted from the transmission apparatus 1A to the reception apparatus 1B. As illustrated in Fig. 4, a frame 10 has a predetermined time length and has a format in which a subframe 11 with the same content is consecutively repeated a plurality of times. Each subframe 11 includes a preamble 12, a synchronization word 13, a payload (data) 14, and a CRC part 15. The preamble 12, the synchronization word 13, and the CRC part 15 each have a fixed size. The payload may have a fixed size or a variable size. The subframe 11 is an example of a set.

The payload 14 contains information used to calculate the end (end time) of the frame 10, and the other data. The information for the end calculation contains, for example, information that represents the number of remaining repetitions of the subframe 11. In addition, the information for end calculation may further contain, for example, information that represents the length (size) of the subframe 11. For example, the subframe length may be calculated from the length (size) of the frame 10 and the number of repetitions, the length (size) of the frame 10 being represented by information contained in the payload 14. In the present embodiment, in one wireless frame 10, the subframe 11 is transmitted in a repetitive manner. The contents of the subframes 11 can be made the same except for the information for end calculation. However, the contents of the subframes 11 may differ, among them, in information other than the information for end calculation.

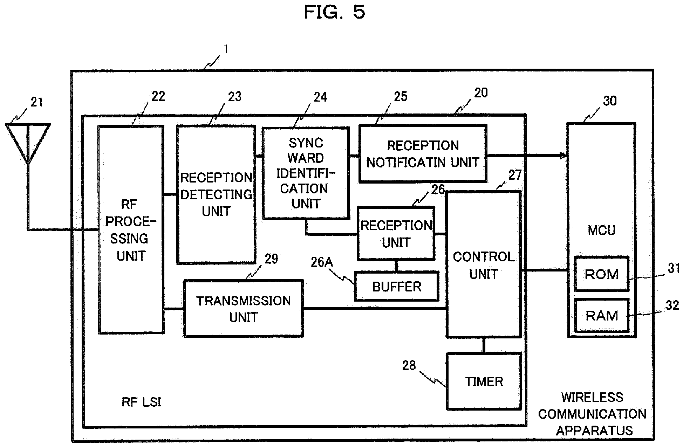

Fig. 5 is a diagram illustrating a configuration example of the wireless communication apparatus 1. The wireless communication apparatus 1 illustrated in Fig. 5 can be used as a transmission apparatus 1A as well as a reception apparatus 1B. The wireless communication apparatus 1 includes an RF LSI 20 that performs wireless processing (hereafter, expressed as an LSI 20) and an MCU 30 that performs operation control of the LSI 20 and a process on received data. The LSI 20 and the MCU 30 both transit between the power saving mode and the active mode.

The LSI 20 includes an RF processing unit 22 that is connected to an antenna 21, a reception detecting unit 23 that is connected to the RF processing unit 22, a synchronization word identification unit 24 that is connected to the reception detecting unit 23, and a reception notification unit 25 that is connected to the synchronization word identification unit 24. Furthermore, the LSI 20 includes a reception unit 26 that is connected to the synchronization word identification unit 24, a buffer 26A that is connected to the reception unit 26, and a control unit 27 that is connected to the reception unit 26. Furthermore, the LSI 20 includes a timer 28 that is connected to the control unit 27, and a transmission unit 29 that is connected to the control unit 27, the transmission unit 29 being connected to the RF processing unit 22.

The MCU 30 is electrically connected to the LSI 20 and includes a Read Only Memory (ROM) 31 and a Random Access Memory (RAM) 32. The RF processing unit 22 performs the receiving process of a wireless signal that is received from the antenna 21 and the transmitting process of a wireless signal to be transmitted from the antenna 21.

The reception detecting unit 23 carries out carrier sense for a frame 10 to detect carrier that is received by the RF processing unit 22. The carrier sense is carried out at monitoring intervals set in advance. Specifically, the reception detecting unit 23 detects the reception when the reception strength (Received Signal Strength Indicator (RSSI)) of radio waves received by the antenna 21 exceeds a threshold value.

The synchronization word identification unit 24 stands by for a synchronization word 13 in the carrier when the carrier is detected by the reception detecting unit 23. The synchronization word identification unit 24 has a standby timer for the synchronization word 13. If a synchronization word 13 is received before the standby timer expires, the synchronization word identification unit 24 determines whether or not the synchronization word 13 matches a synchronization word that is saved in advance in the LSI 20. The reception notification unit 25 transmits a reception notification to the MCU 30 with an interrupt when the synchronization words match in the synchronization word identification unit 24, and causes the MCU 30 to release the power saving mode (causes the MCU 30 to transit to the active mode).

The reception unit 26 receives the payload 14 and stores the payload 14 in the buffer 26A when the synchronization words 13 match in the synchronization word identification unit 24. The buffer 26A has, for example, a queue (FIFO (First-In First-Out)) in which payloads 14 are stored in order of arrival.

The control unit 27 controls the operation of the units of the LSI 20. For example, the control unit 27 performs the setting of the interval (a monitoring interval) for the carrier sense with the timer 28, the setting of a time to be counted by the standby timer for the synchronization word 13 included in the synchronization word identification unit 24, the assembly of a frame 10, and the like. The transmission unit 29 performs the transmitting process of a frame 10. The timer 28 is a timer that manages the monitoring interval. The LSI 20 is an example of the transmission unit and the reception unit. Note that a calculating process of the end time of a frame 10 and a generating process of a frame 10 performed by at least the control unit 27 of the LSI 20 may be performed by a processor executing a program. The processor includes a CPU, a microcomputer, a microcontroller, or the like.

The MCU 30 loads a program stored in the ROM 31 into the RAM 32 and executes the program to perform various processes. For example, the MCU 30 performs a process of setting an interval for intermittent reception to the LSI 20. In addition, the MCU 30 performs a process on data received by the LSI 20.

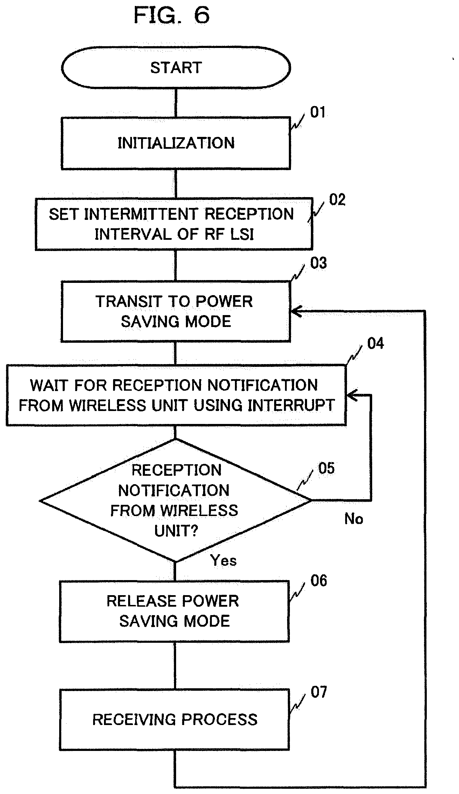

Fig. 6 is a flow chart illustrating an example of processing performed by the MCU 30. The processing illustrated in Fig. 6 is started by, for example, a predetermined trigger such as power on of the MCU 30. In 01, the MCU 30 performs an initialization processing.

In 02, the MCU 30 sets an interval (a monitoring interval) for the intermittent reception of the LSI 20. The MCU 30 transmits a setting instruction that contains the value of the interval, to the control unit 27 of the LSI 20. In the LSI 20, the control unit 27 sets the interval under the setting instruction.

In 03, the MCU 30 transits to the power saving mode. That is, the MCU 30 is brought into a state of standing by for a reception notification with an interrupt from the LSI 20 (04 and 05). In the power saving mode, the MCU 30 is brought into a state (power off) of stopping its operation and processing except for standing by for a reception notification.

When the reception notification is received in 05 (Yes in 05), the MCU 30 releases the power saving mode to transit to the active mode (06). The MCU 30 takes out data stored in the payload 14 from the queue of the buffer 26A and performs a predetermined process on the data (07). When the processing to the data is finished, the processing returns to 03 and the MCU 30 transits to the power saving mode again.

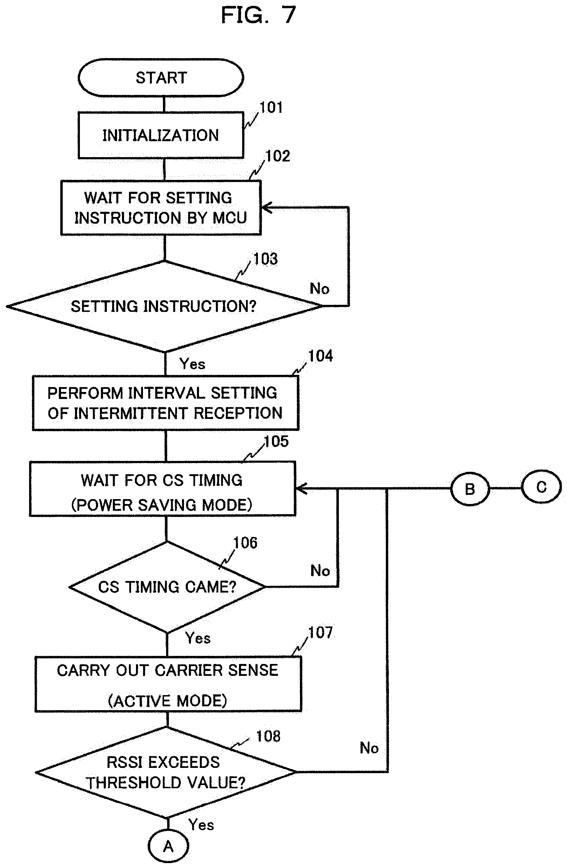

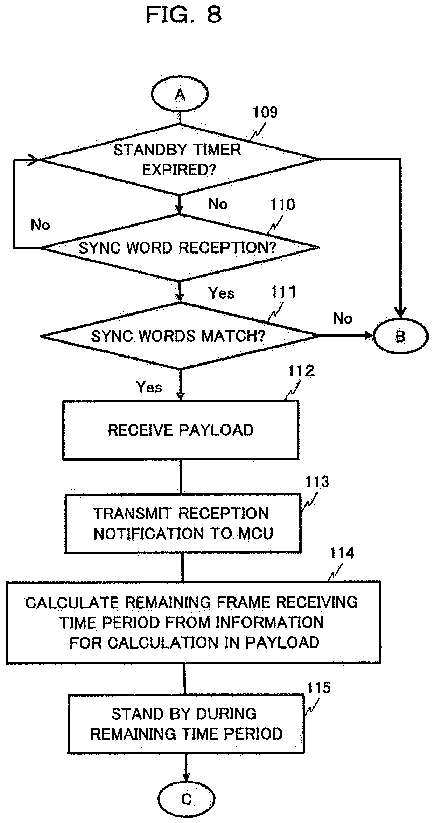

Fig. 7 and Fig. 8 are a flow chart illustrating an example of processing performed by the LSI 20. The processing illustrated in Fig. 7 is started by, for example, a predetermined trigger such as power on of the LSI 20. In the first 101, the LSI 20 performs an initialization process.

When finishing the initialization, the LSI 20 stands by for a setting instruction of the interval for the intermittent reception from the MCU 30 (102 and 103). When the setting instruction is input from the MCU 30, the interval setting for the intermittent reception is performed (104). That is, the control unit 27 receives the setting instruction from the MCU 30 and sets the interval specified by the setting instruction to the timer 28. This causes the carrier sense to be carried out by the reception detecting unit 23 whenever the timer 28 expires. The carrier sense is an example of a trial of sensing a wireless frame.

When the setting of the interval is finished, the LSI 20 transits to the power saving mode and comes into a state of standing by for a carrier sense (CS) timing. That is, the LSI 20 waits for the expiration of the timer 28. In the power saving mode of the LSI 20, the LSI 20 comes into a state (power off) of stopping its operation and processing except for the function in which that the control unit 27 stands by for the expiration of the timer 28.

When the expiration of the timer 28, namely, the CS timing comes (Yes in 106), the LSI 20 transits from the power saving mode to the active mode, and the reception detecting unit 23 carries out the carrier sense (107). That is, the reception detecting unit 23 measures the Received Signal Strength Indicator (RSSI) of radio waves received by the antenna 21 and determines whether or not the RSSI exceeds a predetermined threshold value (108). When the RSSI do not exceed the threshold value (No in 108), it is considered that no carrier is detected, the processing returns to 105, where the LSI 20 transits to the power saving mode to stand by until the next CS timing.

On the other hand, when the RSSI exceeds the threshold value (Yes in 108), the processing proceeds to 109. In 109, the synchronization word identification unit 24 sets the standby timer for a synchronization word 13 and stands by for the reception of a synchronization word 13 (110). When a synchronization word 13 is received before the expiration of the standby timer (Yes in 110), the processing proceeds to step 111. On the other hand, when the standby timer expires (Yes in 109), the LSI 20 transits to the power saving mode and waits for the next CS timing (105).

In 111, the synchronization word identification unit 24 checks the synchronization word. That is, the synchronization word identification unit 24 compares the received synchronization word 13 with a synchronization word that is saved in advance in the LSI 20 to determine whether or not the both of them match. At this point, when the synchronization words 13 do not match (No in 111), the processing returns to 105. On the other hand, when the synchronization words 13 match (Yes in 111), the reception unit 26 receives the payload 14 following the synchronization word 13 and stores the payload 14 in the buffer 26A (112) . At this point, the reception unit 26 performs CRC check, and when a CRC check result is OK, the payload 14 is stored in the buffer 26A. When the CRC check is NG, the payload 14 is not stored, and the LSI 20 comes in a state of standing by for the next CS timing.

When the payload 14 is successfully stored in the buffer 26A, the reception notification unit 25 transmits a reception notification to the MCU 30 with an interrupt (113) . In this manner, the MCU 30 performs the processes of steps 06 and 07 in Fig. 6.

In 114, the control unit 27 refers to the information for end calculation contained in the payload 14 (Fig. 4) stored in the buffer 26A and calculates the end (end time) of the reception of the frame 10. The calculation of the end time can be performed, for example, as follows. The remaining size (a bit count or a byte count) of the frame 10 is calculated from the number of remaining repetitions and the subframe length (size) of the subframe 11. The remaining size of the frame 10 is converted into time using a transmission speed (known to the LSI 20).

In the next 115, a waiting process of the remaining time of the frame 10 is performed. That is, the control unit 27 sets the timer 28 such that the timer 28 expires with a CS timing that first comes after the end time of the frame 10 based on the calculation result in 114 (the end time of the frame 10) . Afterward, the processing returns to 105, where the LSI 20 transits to the power saving mode. Note that, the waiting process of the remaining time will be described later in detail.

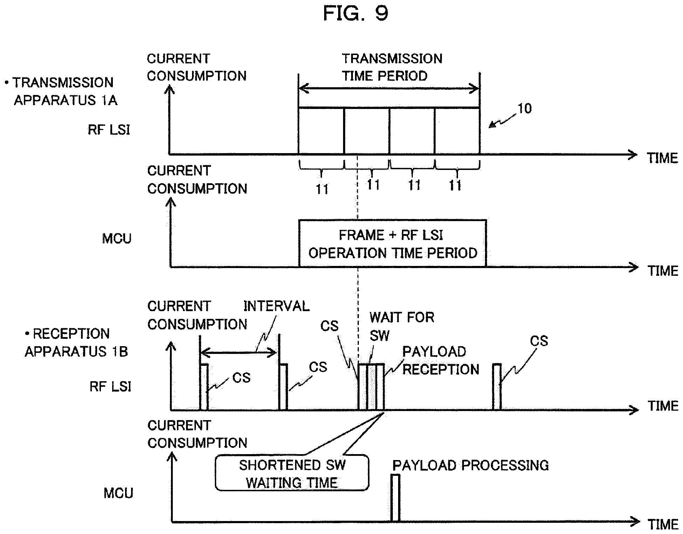

Fig. 9 is an illustrative diagram of an operational advantage of the communication system (the transmission apparatus 1A and the reception apparatus 1B) according to the embodiment. In Fig. 9, the uppermost chart depicts the relationship (power consumption) between current consumption and time in the LSI 20 of the transmission apparatus 1A. The second uppermost chart depicts the relationship (power consumption) between current consumption and time in the MCU 30 of the transmission apparatus 1A. The third uppermost chart depicts the relationship (power consumption) between current consumption and time in the LSI 20 of the reception apparatus 1B. The lowermost chart depicts the relationship (power consumption) between current consumption and time in the MCU 30 of the reception apparatus 1B.

The MCU 30 of the transmission apparatus 1A operates in the active mode during the generation of a frame 10 and the operation time of the LSI 20, consuming more power than in the power saving mode. The LSI 20 of the transmission apparatus 1A operates in the active mode during the transmission time period of the frame 10, consuming more power than in the power saving mode.

The LSI 20 of the reception apparatus 1B carries out carrier sense (CS) at, for example, intervals shorter than the time length of the frame 10. However, the interval of CS being shorter than the time length of the frame 10 is not a requisite. It is noted however that the time length of the subframe 11 (Fig. 4) repeated in the frame 10 is shorter than the interval of CS. As an example, the transmission time period of the frame 10 is set at 2.2 seconds.

The frame 10 has a format in which the subframe 11 with the same content containing a synchronization word 13 is repeated (Fig. 4) . For that reason, when the preamble 12 of any subframe 11 of the frame 10 is detected in CS carried out by the reception apparatus 1B, the synchronization word 13 contained in the subframe 11 can be received. For that reason, a time taken from the sensing of the frame 10 up to the reception of the synchronization word 13 is short as compared with the related art. The shorter waiting time for the synchronization word 13 means that a time period during which the LSI 20 operates in the active mode can be shortened. Therefore, the power consumption of the LSI 20 can be reduced.

In addition, the repetition of the subframe 11 with the same content in the frame 10 allows the reception apparatus 1B to gain a plurality of reception opportunities of a synchronization word 13 from the sensing of the frame 10 up to the end of the frame 10. That is, depending on timing of the sensing the frame 10, there may be a case where the synchronization word 13 of a subframe 11 fails to be received in sensing. However, with the next subframe 11, the synchronization word 13 of the next subframe 11 can be received. Also in this case, the waiting time will not be long as compared with the related art.

In addition, the time length of the preamble 12 of the frame 10 is short as compared with the related art, and thus the expiration time (waiting time) of the standby timer for the synchronization word 13 can be shortened. The waiting time may be set in accordance with, for example, the time length of the preamble 12, or may be set in accordance with the time length of the subframe 11.

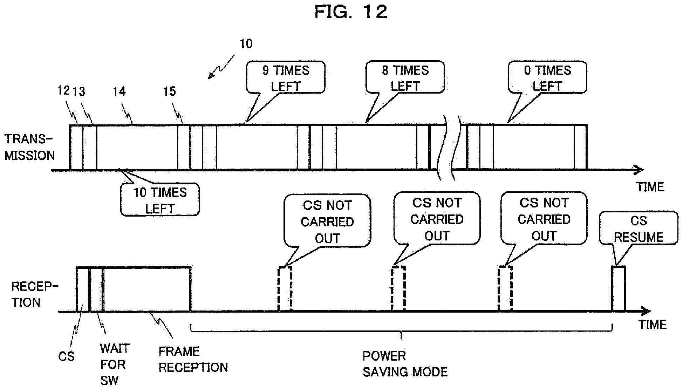

Alternatively, when the payload 14 has a fixed length, the waiting time is set at a time period obtained by adding a predetermined margin time to a time length from the head of some subframe 11 up to the payload 14 of the next subframe 11. This enables sensing the synchronization word 13 of either a subframe 11 in sensing the frame 10 (the second leftmost subframe 11 in Fig. 12) or the next subframe 11. Alternatively, the waiting time may be set at the time lengths of the two subframes 11. As seen from the above, the waiting time can be set as appropriate. At this point, setting a waiting time longer than the monitoring interval as in the related art is not requested.

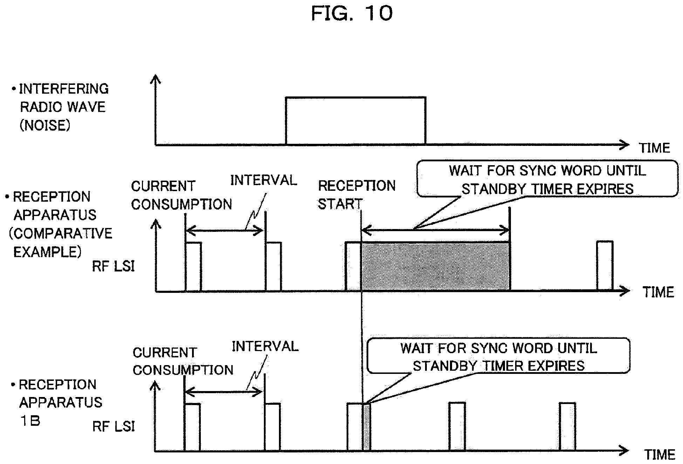

Fig. 10 is an illustrative diagram of the other operational advantage of the communication system (the transmission apparatus 1A and the reception apparatus 1B) according to the embodiment. The uppermost chart in Fig. 10 depicts an interfering radio wave (noise). The middle chart depicts, as a comparative example, how the RF LSI of a reception apparatus according to the related art operates when the reception apparatus receives an interfering radio wave. The lowermost chart depicts how the LSI 20 operates when the reception apparatus 1B receives an interfering radio wave.

Since an interfering radio wave does not contain a synchronization word, the reception apparatusestands by for the reception of a synchronization word until the standby timer expires. In the comparative example, a waiting time longer than the length of the preamble is set, and thus when the preamble is 2.2 seconds, the RF LSI operates in the active mode for 2.2 seconds or more. In contrast, since the reception apparatus 1B can shorten the waiting time for the above-described reason, it is possible to shorten a time period during which the LSI 20 operates in the active mode. As seen from the above, according to the reception apparatus 1B, it is possible to avoid a waste of power with the reception of an interfering radio wave.

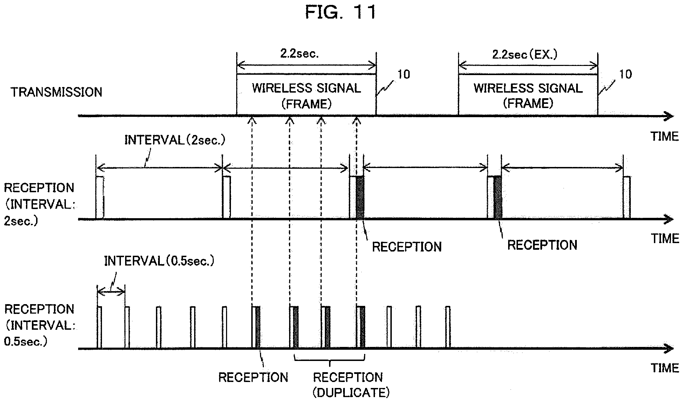

Lastly, the waiting process of the remaining time will be described. Fig. 11 is a diagram illustrating an example of duplicate reception of data. Fig. 12 is an illustrative diagram of a method of avoiding the duplicate reception of data (the waiting process of the remaining time).

As illustrated in Fig. 11, when the time length of a frame 10 (a transmission time period) is substantially the same as a monitoring interval, or when the transmission time period is longer than the monitoring interval, there is a small possibility that a frame 10 is detected in some CS and thereafter the same frame 10 is detected in the next CS. The upper and middle charts in Fig. 11 illustrate the case where the transmission time period of the frame 10 is 2.2 seconds and the interval for CS is 2 seconds. In this case, with a CS timing next to a CS timing with which the frame 10 is detected, the frame 10 is already ended.

However, when the transmission time period of the frame 10 is sufficiently shorter than the interval for CS, the reception apparatus 1B may receive the same payloads (data items) in a duplicate manner. The lower chart in Fig. 11 illustrates a case where the interval for CS is 0.5 seconds. The reception apparatus 1B detects a frame 10 and receives a payload 14, and thereafter detects the same frames 10 again in the subsequent CSes, receiving payloads from different subframes 11. Receiving the same payloads 14 (data item) is a needless process.

The method of avoiding duplicate reception of such the same data is the waiting process of the remaining time. As has already been described, as the waiting process of the remaining time, the end time of the frame 10 is calculated using the information for end calculation of the frame 10 that is contained in the received payload 14. For example, the end time of the frame 10 can be calculated from the number of remaining repetitions of the subframe 11 and the length of the subframe 11. According to the setting of the timer 28 by the control unit 27, the LSI 20 maintains the power saving mode until a CS timing occurring after the end time.

This causes, as illustrated in Fig. 12, CS to be stopped at least until the frame 10 ends. For that reason, it is possible to avoid the duplicate reception of the payload 14 and to achieve power consumption reduction. Note that, the waiting process of the remaining time is optional, and the configuration according to the process can be omitted. The configurations of the embodiment described above can be combined as appropriate.

According to the embodiment, it is possible to achieve shortening a time period during which power saving mode is released in a reception apparatus. The configurations according to the first through fourth embodiments discussed above may be properly combined.

## Claims

1. A transmission apparatus (1), comprising:
a control unit (27) configured to generate a wireless frame including subframes repeated in the wireless frame,
each of the subframes having a predetermined length and containing a preamble, a synchronization word, and data for a reception apparatus performing intermittent reception, the data in each of the subframes having the same content,
**characterized in that** the subframes further contain information to calculate time from a corresponding subframe to end of the wireless frame being attached to the data in each of the subframes; and
a transmission unit (29) configured to transmit the wireless frame to a reception apparatus.

2. The transmission apparatus (1) according to claim 1, wherein the information to calculate time from a corresponding subframe to end of the wireless frame includes a number of remaining repetitions of the subframe.

3. The transmission apparatus (1) according to claim 2, wherein the information to calculate time from a corresponding subframe to end of the wireless frame further includes a length of the subframe.

4. A reception apparatus (1) performing intermittent reception at a predetermined cycle, the reception apparatus (1) comprising a control unit (27) configured to:
receive any one of subframes repeated in a wireless frame,
each of the subframes having a predetermined length and containing a preamble, a synchronization word, and data for the reception apparatus, the data in each of the subframes having the same content,
**characterized in that** the subframes further contain information to calculate time from a corresponding subframe to end of the wireless frame;
receive the data included in the received subframe; and
perform control to suppress duplicate reception of the data until the wireless frame is finished based on the information.

5. The reception apparatus (1) according to claim 4, wherein the information to calculate time from a corresponding subframe to end of the wireless frame includes a number of remaining repetitions of the subframe.

6. A method of transmitting a frame by a transmission apparatus (1), the method comprising:
generating a wireless frame including subframes repeated in the wireless frame,
each of the subframes having a predetermined length and containing a preamble, a synchronization word, and data for a reception apparatus performing intermittent reception, the data in each of the subframes having the same content,
**characterized in that** the subframes further contain information to calculate time from a corresponding subframe to end of the wireless frame being attached to the data in each of the subframes; and
transmitting the wireless frame to a reception apparatus.

7. A method of receiving data by a reception apparatus that performs intermittent reception at a predetermined cycle, the method comprising:
receiving any one of subframes repeated in a wireless frame,
each of the subframes having a predetermined length and containing a preamble, a synchronization word, and data for the reception apparatus, the data in each of the subframes having the same content,
**characterized in that** the subframes further contain information to calculate time from a corresponding subframe to end of the wireless frame;
receiving the data included in the received subframe; and
performing control to suppress duplicate reception of the data until the wireless frame is finished based on the information.

8. A program that causes a computer, which is included in a transmission apparatus (1), to execute a process comprising:
generating a wireless frame including subframes repeated in the wireless frame,
each of the subframes having a predetermined length and containing a preamble, a synchronization word, and data for a reception apparatus performing intermittent reception, the data in each of the subframes having the same content,
**characterized in that** the subframes further contain information to calculate time from a corresponding subframe to end of the wireless frame being attached to the data in each of the subframes; and
transmitting the frame to a reception apparatus.

9. A program that causes a computer included in a reception apparatus, which performs intermittent reception at a predetermined cycle, to execute a process comprising:
receiving any one of subframes repeated in a wireless frame,
each of the subframes having a predetermined length and containing a preamble, a synchronization word, and data for the reception apparatus, the data in each of the subframes having the same content,
**characterized in that** the subframes further contain information to calculate time from a corresponding subframe to end of the wireless frame;
receiving the data included in the received subframe; and
performing control to suppress duplicate reception of the received data until the wireless frame is finished based on the information.

10. A communication system, comprising:
a transmission apparatus according to claim 1; and
a reception apparatus according to claim 4, performing intermittent reception at a predetermined cycle,

## Patentansprüche

1. Übertragungseinrichtung (1), umfassend:
eine Steuerungseinheit (27), konfiguriert, um einen drahtlosen Rahmen zu erzeugen, der im drahtlosen Rahmen wiederholt auftretende Subrahmen enthält,
wobei jeder der Subrahmen eine vorgegebene Länge aufweist und eine Präambel, ein Synchronisationswort und Daten für eine Empfangseinrichtung, die intermittierenden Empfang durchführt, beinhaltet, wobei die Daten in jedem der Subrahmen den gleichen Inhalt aufweisen,
**dadurch gekennzeichnet, dass** die Subrahmen weiter Informationen beinhalten, zum Berechnen der Zeit von einem entsprechenden Subrahmen bis zum Ende des drahtlosen Rahmens, der an die Daten in jedem der Subrahmen angehängt ist; und
eine Übertragungseinheit (29), die konfiguriert ist, um den drahtlosen Rahmen an eine Empfangseinrichtung zu übertragen.

2. Übertragungseinrichtung (1) nach Anspruch 1, wobei die Information zum Berechnen der Zeit von einem entsprechenden Subrahmen bis zum Ende des drahtlosen Rahmens eine Anzahl von verbleibenden Wiederholungen des Subrahmens enthält.

3. Übertragungseinrichtung (1) nach Anspruch 2, wobei die Information zum Berechnen der Zeit von einem entsprechenden Subrahmen bis zum Ende des drahtlosen Rahmens weiter eine Länge des Subrahmens enthält.

4. Empfangseinrichtung (1), die in einem vorgegebenen Zyklus intermittierenden Empfang durchführt, wobei die Empfangseinrichtung (1) eine Steuerungseinheit (27) umfasst, die konfiguriert ist, um:
jeden der in einem drahtlosen Rahmen wiederholt auftretenden Subrahmen zu empfangen,
wobei jeder der Subrahmen eine vorgegebene Länge aufweist und eine Präambel, ein Synchronisationswort und Daten für eine Empfangseinrichtung, die intermittierenden Empfang durchführt, beinhaltet, wobei die Daten in jedem der Subrahmen den gleichen Inhalt aufweisen,
**dadurch gekennzeichnet, dass** die Subrahmen weiter Informationen beinhalten, zum Berechnen der Zeit von einem entsprechenden Subrahmen bis zum Ende des drahtlosen Rahmens;
die in dem empfangenen Subrahmen enthaltenen Daten zu empfangen; und
eine Steuerung durchzuführen, um einen doppelten Empfang der Daten zu unterdrücken, bis der drahtlose Rahmen auf Basis der Informationen abgearbeitet ist.

5. Empfangseinrichtung (1) nach Anspruch 4, wobei die Information zum Berechnen der Zeit von einem entsprechenden Subrahmen bis zum Ende des drahtlosen Rahmens eine Anzahl von verbleibenden Wiederholungen des Subrahmens enthält.

6. Verfahren zur Übertragung eines Rahmens durch eine Übertragungseinrichtung (1), wobei das Verfahren umfasst:
Erzeugen eines drahtlosen Rahmens, der im drahtlosen Rahmen wiederholt auftretende Subrahmen enthält,
wobei jeder der Subrahmen eine vorgegebene Länge aufweist und eine Präambel, ein Synchronisationswort und Daten für eine Empfangseinrichtung, die intermittierenden Empfang durchführt, beinhaltet, wobei die Daten in jedem der Subrahmen den gleichen Inhalt aufweisen,
**dadurch gekennzeichnet, dass** die Subrahmen weiter Informationen beinhalten, zum Berechnen der Zeit von einem entsprechenden Subrahmen bis zum Ende des drahtlosen Rahmens, der an die Daten in jedem der Subrahmen angehängt ist; und
Übertragen des drahtlosen Rahmens an eine Empfangseinrichtung.

7. Verfahren zum Empfangen von Daten durch eine Empfangseinrichtung, die in einem vorgegebenen Zyklus intermittierenden Empfang durchführt, wobei das Verfahren umfasst:
Empfangen jedes der in einem drahtlosen Rahmen wiederholt auftretenden Subrahmen,
wobei jeder der Subrahmen eine vorgegebene Länge aufweist und eine Präambel, ein Synchronisationswort und Daten für eine Empfangseinrichtung, die intermittierenden Empfang durchführt, beinhaltet, wobei die Daten in jedem der Subrahmen den gleichen Inhalt aufweisen,
**dadurch gekennzeichnet, dass** die Subrahmen weiter Informationen beinhalten, zum Berechnen der Zeit von einem entsprechenden Subrahmen bis zum Ende des drahtlosen Rahmens;
Empfangen der in dem empfangenen Subrahmen enthaltenen Daten; und
Durchführen einer Steuerung, um einen doppelten Empfang der Daten zu unterdrücken, bis der drahtlose Rahmen auf Basis der Informationen abgearbeitet ist.

8. Programm, das einen Computer, der in einer Übertragungseinrichtung (1) enthalten ist, veranlasst, einen Vorgang auszuführen, der umfasst:
Erzeugen eines drahtlosen Rahmens, der im drahtlosen Rahmen wiederholt auftretende Subrahmen enthält,
wobei jeder der Subrahmen eine vorgegebene Länge aufweist und eine Präambel, ein Synchronisationswort und Daten für eine Empfangseinrichtung, die intermittierenden Empfang durchführt, beinhaltet, wobei die Daten in jedem der Subrahmen den gleichen Inhalt aufweisen,
**dadurch gekennzeichnet, dass** die Subrahmen weiter Informationen beinhalten, zum Berechnen der Zeit von einem entsprechenden Subrahmen bis zum Ende des drahtlosen Rahmens, der an die Daten an jedem der Subrahmen angehängt ist; und
Übertragen des Rahmens an eine Empfangseinrichtung.

9. Programm, das einen Computer, der in einer Empfangseinrichtung enthalten ist, die in vorgegebenen Zyklen intermittierenden Empfang durchführt, veranlasst, einen Vorgang auszuführen, der umfasst:
Empfangen jedes der in einem drahtlosen Rahmen wiederholt auftretenden Subrahmen,
wobei jeder der Subrahmen eine vorgegebene Länge aufweist und eine Präambel, ein Synchronisationswort und Daten für eine Empfangseinrichtung, die intermittierenden Empfang durchführt, beinhaltet, wobei die Daten in jedem der Subrahmen den gleichen Inhalt aufweisen,
**dadurch gekennzeichnet, dass** die Subrahmen weiter Informationen beinhalten, zum Berechnen der Zeit von einem entsprechenden Subrahmen bis zum Ende des drahtlosen Rahmens;
Empfangen der in dem empfangenen Subrahmen enthaltenen Daten; und
Durchführen einer Steuerung, um einen doppelten Empfang der empfangenen Daten zu unterdrücken, bis der drahtlose Rahmen auf Basis der Informationen abgearbeitet ist.

10. Kommunikationssystem, umfassend:
eine Übertragungseinrichtung nach Anspruch 1; und
eine Empfangseinrichtung nach Anspruch 4, die in einem vorgegebenen Zyklus intermittierenden Empfang durchführt.

## Revendications

1. Appareil de transmission (1) comprenant :
une unité de commande (27) configurée pour générer une trame sans fil comprenant des sous-trames répétées dans la trame sans fil,
chacune des sous-trames ayant une longueur prédéterminée et contenant un préambule, un mot de synchronisation et des données pour un appareil de réception effectuant une réception intermittente, les données de chacune des sous-trames ayant la même teneur,
**caractérisé en ce que** les sous-trames contiennent en outre des informations pour calculer le temps à partir d'une sous-trame correspondante jusqu'à la fin de la trame sans fil qui sont attachées aux données de chacune des sous-trames ; et
une unité de transmission (29) configurée pour transmettre la trame sans fil à un appareil de réception.

2. Appareil de transmission (1) selon la revendication 1, dans lequel les informations pour calculer le temps à partir d'une sous-trame correspondante jusqu'à la fin de la trame sans fil comprennent un nombre de répétitions restantes de la sous-trame.

3. Appareil de transmission (1) selon la revendication 2, dans lequel les informations pour calculer le temps à partir d'une sous-trame correspondante jusqu'à la fin de la trame sans fil comprennent en outre une longueur de la sous-trame.

4. Appareil de réception (1) effectuant une réception intermittente selon un cycle prédéterminé, l'appareil de réception (1) comprenant une unité de commande (27) configurée pour :
recevoir une quelconque de sous-trames répétées dans une trame sans fil,
chacune des sous-trames ayant une longueur prédéterminée et contenant un préambule, un mot de synchronisation et des données pour l'appareil de réception, les données de chacune des sous-trames ayant la même teneur, **caractérisé en ce que** les sous-trames contiennent en outre des informations pour calculer le temps à partir d'une sous-trame correspondante jusqu'à la fin de la trame sans fil ;
recevoir les données comprises dans la sous-trame reçue ; et
effectuer une commande pour supprimer la réception dupliquée des données jusqu'à ce que la trame sans fil soit terminée sur la base des informations.

5. Appareil de réception (1) selon la revendication 4, dans lequel les informations pour calculer le temps à partir d'une sous-trame correspondante jusqu'à la fin de la trame sans fil comprennent un nombre de répétitions restantes de la sous-trame.

6. Procédé de transmission d'une trame par un appareil de transmission (1), le procédé comprenant les étapes consistant à :
générer une trame sans fil comprenant des sous-trames répétées dans la trame sans fil,
chacune des sous-trames ayant une longueur prédéterminée et contenant un préambule, un mot de synchronisation et des données pour un appareil de réception effectuant une réception intermittente, les données de chacune des sous-trames ayant la même teneur,
**caractérisé en ce que** les sous-trames contiennent en outre des informations pour calculer le temps à partir d'une sous-trame correspondante jusqu'à la fin de la trame sans fil qui sont attachées aux données de chacune des sous-trames ; et
transmettre la trame sans fil à un appareil de réception.

7. Procédé de réception de données par un appareil de réception qui effectue une réception intermittente selon un cycle prédéterminé, le procédé comprenant les étapes consistant à :
recevoir l'une quelconque de sous-trames répétées dans une trame sans fil,
chacune des sous-trames ayant une longueur prédéterminée et contenant un préambule, un mot de synchronisation et des données pour l'appareil de réception, les données de chacune des sous-trames ayant la même teneur, **caractérisé en ce que** les sous-trames contiennent en outre des informations pour calculer le temps à partir d'une sous-trame correspondante jusqu'à la fin de la trame sans fil ;
recevoir les données comprises dans la sous-trame reçue ; et
effectuer une commande pour supprimer une réception dupliquée des données jusqu'à ce que la trame sans fil soit terminée sur la base des informations.

8. Programme qui amène un ordinateur, qui est inclus dans un appareil de transmission (1), à exécuter un procédé comprenant les étapes consistant à :
générer une trame sans fil comprenant des sous-trames répétées dans la trame sans fil,
chacune des sous-trames ayant une longueur prédéterminée et contenant un préambule, un mot de synchronisation et des données pour un appareil de réception effectuant une réception intermittente, les données de chacune des sous-trames ayant la même teneur,
**caractérisé en ce que** les sous-trames contiennent en outre des informations pour calculer le temps à partir d'une sous-trame correspondante jusqu'à la fin de la trame sans fil qui sont attachées aux données de chacune des sous-trames ; et
transmettre la trame à un appareil de réception.

9. Programme qui amène un ordinateur inclus dans un appareil de réception qui effectue une réception intermittente selon un cycle prédéterminé à exécuter un procédé comprenant les étapes consistant à :
recevoir l'une quelconque de sous-trames répétées dans une trame sans fil,
chacune des sous-trames ayant une longueur prédéterminée et contenant un préambule, un mot de synchronisation et des données pour l'appareil de réception, les données de chacune des sous-trames ayant la même teneur,
**caractérisé en ce que** les sous-trames contiennent en outre des informations pour calculer le temps à partir d'une sous-trame correspondante jusqu'à la fin de la trame sans fil ;
recevoir les données comprises dans la sous-trame reçue ; et
effectuer une commande pour supprimer une réception dupliquée des données reçues jusqu'à ce que la trame sans fil soit terminée sur la base des informations.

10. Système de communication comprenant :
un appareil de transmission selon la revendication 1 ; et
un appareil de réception selon la revendication 4, effectuant une réception intermittente selon un cycle prédéterminé.
